# FASCICULE DE BREVET EUROPEEN

(11) **EP 2 021 179 B1**
(45) Date de publication et mention de la délivrance du brevet: **06.09.2017**
(21) Numéro de dépôt: 07766091.8
(22) Date de dépôt: 23.05.2007
(51) Int. Cl.: B32B 27/08, B32B 27/18, B32B 27/30, C08L 33/06

(54) **PROCEDE DE COEXTRUSION MULTICOUCHE**
VERFAHREN ZUR MEHRSCHICHTIGEN KOEXTRUSION
MULTI-LAYER COEXTRUSION METHOD

(30) Priorité: 23.05.2006 FR 0604594
(43) Date de publication de la demande: 11.02.2009
(73) Titulaire: ARKEMA FRANCE, 92700 Colombes (FR)
(72) Inventeur: DELPRAT, Patrick, F-64230 Lescar (FR)
(74) Mandataire: Bonnel, Claudine
(86) Numéro de dépôt international: PCT/FR2007/051318
(87) Numéro de publication internationale: WO 2007/135344

(56) Documents cités:
- EP-B1- 1 123 353
- US-A1- 2005 064 155
- DATABASE WPI Week 200414 Derwent Publications Ltd., London, GB; AN 2004-136782 XP002420629 & JP 2003 211525 A (NISSAN MOTOR CO LTD) 29 juillet 2003 (2003-07-29)
- DATABASE WPI Week 198744 Derwent Publications Ltd., London, GB; AN 1987-311093 XP002420630 & JP 62 220508 A (NIPPON SHOKUBAI KAGAKU KOGYO CO LTD) 28 septembre 1987 (1987-09-28)
- DATABASE WPI Week 200601 Derwent Publications Ltd., London, GB; AN 2006-002731 XP002420631 & JP 2005 314534 A (TORAY IND INC) 10 novembre 2005 (2005-11-10)

## Description

La présente invention se rapporte à procédé permettant de protéger un polymère thermoplastique à l'aide d'un polymère acrylique. L'invention a trait aussi à une structure multicouche comprenant le polymère thermoplastique et le polymère acrylique et aux utilisations de cette structure multicouche.

Certains polymères thermoplastiques comme le polystyrène choc (HIPS), les résines ABS (acrylonitrile-butadiène-styrène), le PVC sont largement employés dans la fabrication d'articles et de pièces moulés que l'on rencontre fréquemment dans la vie courante (panneaux de caravanes ou de mobil-homes, profilés de fenêtres, de portes ou de volets,...). Bien que ces polymères présentent une certaine tenue mécanique et soient relativement peu chers, ils présentent une mauvaise résistance au vieillissement (au sens le plus large, c'est-à-dire résistance à la lumière, à la rayure, aux solvents et produits chimiques,...). C'est pourquoi il est maintenant courant de recouvrir ces plastiques d'une couche protectrice (couche de surface) en un polymère acrylique.

La Demanderesse a constaté que certains polymères acryliques permettent d'améliorer la résistance à la rayure de la couche protectrice. De plus, lorsque la couche protectrice doit présenter une résistance à l'impact, il est courant d'ajouter au polymère acrylique un modifiant choc, mais celui-ci a pour effet de diminuer la résistance à la rayure. En présence des polymères acryliques sélectionnés, la Demanderesse a constaté que l'on peut améliorer la résistance à l'impact tout en conservant une bonne résistance à la rayure.

### L'art antérieur

US 5318737 et EP 0458520 A2 décrivent un procédé de coextrusion d'un polymère thermoplastique et d'une résine acrylique (procédé « capstock ») qui est composée de MMA et d'un acrylate d'alkyle en C1-C4 tel que l'acrylate d'éthyle.

EP 1174465 B1 décrit un procédé « capstock » pour lequel la résine acrylique utilisée pour la couche de surface comprend de 10 à 95% d'un PMMA, de 0 à 60% d'un modifiant choc et de 5 à 40% d'un additif acrylique. Le PMMA peut être un copolymère du MMA et d'un acrylate d'alkyle en C1-C10.

EP 1109861 B1 décrit un procédé « capstock » pour lequel la résine acrylique utilisée pour la couche de surface comprend de 50 à 99% de MMA et de 1 à 50% d'un acrylate d'alkyle, tel que l'acrylate de méthyle, éthyle ou butyle.

EP 1013713 A1 décrit un procédé « capstock » pour lequel la résine acrylique utilisée pour la couche de surface est à base d'un ester ou amide de l'acide acrylique ou alpha-alkylacrylique.

EP 0476942 A2 décrit un procédé « capstock » pour lequel la résine utilisée pour la couche de surface est un mélange d'une résine acrylique et d'un PVDF. La résine acrylique peut être un copolymère du MMA et d'un acrylate d'alkyle.

EP 1350812 A2 décrit un procédé « capstock » pour lequel la résine utilisée pour la couche de surface est un copolymère du MMA et d'un acrylate d'alkyle en C1-C4.

Aucun de ces documents ne décrit le procédé de l'invention.

### Brève description de l'invention

L'invention est relative à un procédé permettant de protéger un polymère thermoplastique consistant à superposer dans l'ordre par coextrusion, par compression à chaud ou par multiinjection:
- une couche protectrice (I) comprenant un copolymère acrylique comprenant en poids (le total faisant 100%) :
   - de 80 à 99,8% de méthacrylate de méthyle (MMA),
   - de 0 à 20% d'au moins un comonomère copolymérisable par voie radicalaire avec le MMA,
   - et de 0,2 à 10% :
      o d'anhydride maléique ou
      o d'acide acrylique et/ou méthacrylique et éventuellement de groupements anhydride de formule : 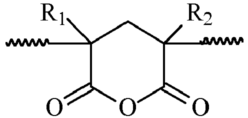 dans laquelle R₁ et R₂ désignent H ou un radical méthyle, ladite groupements anhydride sont obtenues par deux unités acides adjacentes qui peut réagir entre elles par déshydratation pour donner un groupement anhydride
- une couche d'au moins un polymère thermoplastique (II), la couche protectrice (I) a une épaisseur comprise entre 10 et 1000 µm.

L'invention est aussi relative à une structure multicouche comprenant la couche protectrice (I) et la couche du polymère thermoplastique (II) ainsi qu'à l'utilisation de la structure multicouche pour la fabrication d'objets et d'articles de la vie courante tels que :
- des boîtiers ou carters de tondeuses, de tronçonneuses, de jet-skis, d'appareils ménagers ;
- des coffres de toits de voiture, de pièces de carrosserie ;
- des plaques minéralogiques ;
- des panneaux muraux extérieurs de caravanes et de mobil-homes ;
- des panneaux extérieurs de réfrigérateurs ;
- des panneaux de cabines de douche ;
- des portes de bâtiments ;
- des moulures de fenêtres ;
- des panneaux de bardage ;
- de portes d'équipements ménagers (par ex. portes de cuisine).

L'invention pourra être mieux comprise à la lecture de la description détaillée qui va suivre.

### Description détaillée de l'invention

### définitions

T_{g} désigne la température de transition vitreuse d'un polymère. Par extension, on désignera par T_{g} d'un monomère la T_{g} de l'homopolymère obtenu par polymérisation radicalaire dudit monomère. Le terme (méth)acrylate désigne pour simplifier un acrylate ou un méthacrylate.

**On désigne par monomère (méth)acrylique,** un monomère qui peut être :
- un monomère acrylique tel que les acrylates d'alkyle, de préférence en C₁-C₁₀, de cycloalkyle ou d'aryle tels que l'acrylate de méthyle, d'éthyle, de propyle, de n-butyle, d'isobutyle, de tertiobutyle, de 2-éthylhexyle, les acrylates d'hydroxyalkyle tels que l'acrylate de 2-hydroxyéthyle, les acrylates d'étheralkyle tels que l'acrylate de 2-méthoxyéthyle, les acrylates d'alcoxy- ou aryloxypolyalkylèneglycol tels que les acrylates de méthoxypolyéthylèneglycol ou d'éthoxypolyéthylèneglycol, les acrylates d'amino-alkyle tels que l'acrylate de 2-(diméthylamino)éthyle, les acrylates silylés, l'acrylate de glycidyle,
- un monomère méthacrylique tel que, les méthacrylates d'alkyle, de préférence en C₂-C₁₀, de cycloalkyle ou d'aryle tels que le méthacrylate d'éthyle, de propyle, de n-butyle, d'isobutyle, de tertiobutyle, de 2-éthylhexyle, les méthacrylates d'hydroxyalkyle tels que le méthacrylate de 2-hydroxyéthyle, les méthacrylates d'étheralkyle tels que le méthacrylate de 2-méthoxyéthyle, les méthacrylates d'alcoxy- ou aryloxypolyalkylèneglycol tels que les méthacrylates de méthoxypolyéthylèneglycol ou d'éthoxy-polyéthylèneglycol, les méthacrylates d'aminoalkyle tels que le méthacrylate de 2-(diméthylamino)éthyle, les méthacrylates silylés, le méthacrylate de glycidyle.

**S'agissant de la couche protectrice (I),** celle-ci comprend un copolymère acrylique comprenant en poids :
- de 80 à 99,8% de méthacrylate de méthyle (MMA),
- de 0 à 20%, et de préférence de 0 à 10 %, d'au moins un comonomère copolymérisable par voie radicalaire avec le MMA,
- de 0,2 à 10% d'acide acrylique et/ou méthacrylique,
le total faisant 100%.

De préférence, le copolymère acrylique comprend en poids :
- de 80 à 99% de méthacrylate de méthyle (MMA),
- de 0 à 10% d'au moins un comonomère copolymérisable par voie radicalaire avec le MMA,
- de 1 à 10% d'acide acrylique et/ou méthacrylique,
le total faisant 100%.

De préférence, le comonomère copolymérisable est un monomère (méth)acrylique ou un monomère vinylaromatique tel que par exemple le styrène, les styrènes substitués, l'alpha-méthylstyrène, le monochlorostyrène, le tertbutyl styrène.

Encore plus préférentiellement, le copolymère acrylique comprend en poids :
- de 90 à 99% de méthacrylate de méthyle (MMA),
- de 1 à 10% d'acide acrylique et/ou méthacrylique,
le total faisant 100%.

Deux unités acides adjacentes peuvent réagir entre elles par déshydratation pour donner un groupement anhydride de formulé : 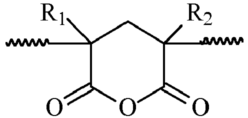 dans laquelle R₁ et R₂ désignent H ou un radical méthyle. La déshydratation peut se produire à chaud lors de l'extrusion du copolymère. Le copolymère comprend donc l'acide acrylique et/ou méthacrylique et éventuellement les groupements anhydride précédents (issus des unités acide acrylique et/ou méthacrylique par déshydratation intramoléculaire).

Selon une variante, le copolymère acrylique comprend à la place de l'acide acrylique et/ou méthacrylique de l'anhydride maléique.

Le copolymère acrylique peut être obtenu à l'aide de la polymérisation radicalaire conduite avec un procédé masse, en solution dans un solvant ou bien en milieu dispersé (suspension ou émulsion). Lorsqu'on utilise le procédé de polymérisation en suspension aqueuse, on récupère le polymère acrylique sous forme de perles sensiblement sphériques. On élimine une partie de l'eau, puis on extrude le polymère sous forme de granulés à l'aide d'une extrudeuse-dégazeuse.

Le copolymère acrylique peut être renforcé à l'impact à l'aide d'au moins un modifiant choc. On utilise avantageusement une extrudeuse pour réaliser le mélange. Le modifiant choc peut être par exemple un élastomère acrylique. L'élastomère acrylique peut être un copolymère séquencé présentant au moins une séquence élastomérique. Par exemple, il peut s'agir d'un copolymère styrène-butadiène-méthacrylate de méthyle ou méthacrylate de méthyle-acrylate de butyle-méthacrylate de méthyle. Le modifiant choc peut se présenter aussi sous forme de fines particules multicouches, appelées core-shell (noyau-écorce), ayant au moins une couche élastomérique (ou molle), c'est-à-dire une couche formée d'un polymère ayant une T_{g} inférieure à -5°C et au moins une couche rigide (ou dure), c'est-à-dire formée d'un polymère ayant une T_{g} supérieure à 25°C.

De préférence, le polymère de T_{g} inférieure à -5°C est obtenu à partir d'un mélange de monomères comprenant de 50 à 100 parts d'au moins un (méth)acrylate d'alkyle en C₁-C₁₀, de 0 à 50 parts d'un comonomère monoinsaturé copolymérisable, de 0 à 5 parts d'un monomère réticulant copolymérisable et de 0 à 5 parts d'un monomère de greffage copolymérisable.

De préférence, le polymère de T_{g} supérieure à 25°C est obtenu à partir d'un mélange de monomères comprenant de 70 à 100 parts d'au moins un (méth)acrylate d'alkyle en C₁-C₄, de 0 à 30 parts d'un monomère monoinsaturé copolymérisable, de 0 à 5 parts d'un monomère réticulant copolymérisable et de 0 à 5 parts d'un monomère de greffage copolymérisable.

Le (méth)acrylate d'alkyle en C₁-C₁₀ est de préférence l'acrylate de butyle, de 2-éthylhexyle, d'octyle. Le (méth)acrylate d'alkyle en C₁-C₄ est de préférence le méthacrylate de méthyle. Le monomère monoinsaturé copolymérisable peut être un (méth)acrylate d'alkyle en C₁-C10, le styrène, l'alpha-méthyl styrène, le butyl styrène, l'acrylonitrile. Il s'agit de préférence du styrène ou de l'acrylate d'éthyle. Le monomère de greffage peut être le (méth)acrylate d'allyle, le maléate de diallyle, le (méth)acrylate de crotyle. Le monomère réticulant peut être le diméthacrylate de diéthylèneglycol, le diméthacrylate de 1,3-butylèneglycol, le diméthacrylate de 1,4-butylène glycol, le divinyl benzène, le triacrylate de triméthyolpropane (TMPTA).

Les particules multicouches peuvent être de différentes morphologies. On peut par exemple utiliser des particules du type :
- « mou-dur » ayant un noyau élastomérique (couche interne) et une écorce rigide (couche externe) telles que décrites par exemple dans la demande européenne EP 1061100 A1 ;
- « dur-mou-dur » ayant un noyau rigide, une couche intermédiaire élastomérique et une écorce rigide. telles que décrites par exemple dans les demandes US 3793402 ou US 2004/0030046 A1 ;
- « mou-dur-mou-dur » ayant dans l'ordre un noyau élastomérique, une couche intermédiaire rigide, une autre couche intermédiaire élastomérique et une écorce rigide telles que décrites par exemple dans la demande française FR-A-2446296 décrit des exemples de telles particules ;

La taille des particules est en général inférieure au µm et avantageusement comprise entre 50 et 300 nm. Les particules multicouches sont préparées à l'aide de la polymérisation en émulsion aqueuse, en plusieurs étapes. Au cours de la 1^{ère} étape, on forme des germes autour desquels vont se constituer les couches. La taille finale des particules est déterminée par le nombre de germes qui sont formés lors de la 1^{ère} étape. Au cours de chacune des étapes suivantes, en polymérisant le mélange adéquat, on forme successivement une nouvelle couche autour des germes ou des particules de l'étape précédente. A chaque étape, la polymérisation est conduite en présence d'un amorceur radicalaire, d'un surfactant et éventuellement d'un agent de transfert. On utilise par exemple le persulfate de sodium, de potassium ou d'ammonium. Les particules une fois formées sont récupérées par coagulation ou par atomisation. Un agent antimottant peut être ajouté pour éviter que les particules ne s'agglomèrent.

La proportion de modifiant choc dans le copolymère acrylique varie de 0 à 60 parts, avantageusement de 1 à 60 parts, de préférence de 5 à 40 parts, encore plus préférentiellement de 10 à 30 parts, pour 100 parts de copolymère acrylique.

### Additifs

La ou les couche(s) protectrice(s) peut/peuvent éventuellement comprendre un ou plusieurs additifs choisis parmi les :
- stabilisants thermiques;
- lubrifiants;
- ignifugeants;
- anti-UV;
- antioxydants;
- antistatiques;
- agents mattants qui peuvent être des charges minérales telles que par exemple le talc, le carbonate de calcium, le dioxyde de titane, l'oxyde de zinc ou de magnésium ou des charges organiques telles que par exemple les perles réticulées à base de styrène et/ou de MMA (des exemples de telles perles sont donnés dans EP 1174465).
- pigments et/ou colorants.

La proportion d'additif(s) varie de 0 à 10 parts, avantageusement de 0,2 à 10 parts, de préférence de 0,5 à 5 parts, d'additif(s) pour 100 parts de polymère acrylique.

On trouvera une liste d'anti-UV utilisables dans le document « Plastics Additives and Modifiers Handbook, chap. 16, Environmental Protective Agents », J. Edenbaum, Ed., Van Nostrand, pages 208-271, incorporé par référence à la présente demande. De préférence, l'anti-UV est un composé de la famille des HALS, triazines, benzotriazoles ou benzophenones. On peut utiliser des combinaisons de plusieurs anti-UV pour obtenir une meilleure résistance aux UV. A titre d'exemples d'anti-UV utilisables, on peut citer le TINUVIN^{®} 770, le TINUVIN^{®} 328, le TINUVIN^{®} P ou le TINUVIN^{®} 234.

**S'agissant du polymère thermoplastique,** celui-ci peut être choisi dans la liste des polymères suivants :
- polyester saturé (PET, PBT,...) ;
- ABS ;
- SAN (copolymère styrène-acrylonitrile) ;
- ASA (copolymère acrylic-styrene-acrylonitrile)
- polystyrène (cristal ou choc);
- polypropylène (PP);
- polyéthylène (PE);
- polycarbonate (PC);
- PPO ;
- polysulphone ;
- PVC ;
- PVC chloré (PVCC);
- PVC expansé.

Il peut s'agir aussi de mélanges de deux ou plusieurs polymères de la liste précédente. Par exemple, il peut s'agir d'un mélange PPO/PS ou PC/ABS.

### Procédé

L'invention a trait à un procédé permettant de protéger un polymère thermoplastique consistant à superposer dans l'ordre par coextrusion, par compression à chaud, par multiinjection:
- une couche protectrice (I) comprenant le copolymère acrylique tel que défini précédemment,
- une couche d'au moins un polymère thermoplastique (II).

Selon une variante, une autre couche protectrice comprenant le copolymère acrylique est superposée contre la couche du polymère thermoplastique (du côté opposée à la 1^{ère} couche de copolymère acrylique), c'est-à-dire que la couche de polymère thermoplastique (II) est disposée entre deux couches (Ia) et (Ib) comprenant chacune un copolymère acrylique ou encore que la couche du polymère thermoplastique (II) est prise en sandwich entre la couche protectrice (I) et l'autre couche protectrice. On superpose donc dans l'ordre par coextrusion, par compression à chaud, par multiinjection:
- une couche protectrice (Ia) comprenant un copolymère acrylique tel que défini précédemment,
- une couche d'au moins un polymère thermoplastique (II),
- une couche protectrice (Ib) comprenant un copolymère acrylique tel que défini précédemment.

La compression à chaud des couches est une technique utilisable. On peut aussi utiliser une technique de coinjection ou multiinjection. La technique de multiinjection consiste à injecter dans un même moule les matières fondues constituant chacune des couches. Selon une 1^{ère} technique de multiinjection, les matières fondues sont injectées en même temps dans le moule. Selon une 2^{ème} technique, un insert mobile est situé dans le moule. Par cet insert, on injecte dans le moule une matière fondue, puis l'insert mobile est déplacé pour injecter une autre matière fondue.

La technique préférée est la coextrusion qui s'appuie sur l'utilisation d'autant d'extrudeuses qu'il y a de couches à extruder (pour plus de détails, on pourra se reporter à l'ouvrage Principles of Polymer Processing de Z.Tadmor, édition Wiley, 1979). Les nappes de polymères fondues sont réunies à la sortie des extrudeuses pour former la structure multicouche. Cette technique est plus souple que les précédentes et permet d'obtenir des structures multicouches même pour aux géométries compliquées, par exemple des profilés. Elle permet aussi d'avoir une excellente homogénéïté mécanique. La technique de coextrusion est une technique connue en transformation des thermoplastiques (voir par exemple Précis de matières plastiques, Structures-propriétés, 1989, mise en oeuvre et normalisation 4ème édition, Nathan, p. 126). Le document US 5318737 décrit un exemple de coextrusion avec un polymère thermoplastique. On pourra aussi de reporter aux documents US 3476627**,** US 3557265 ou US 3918865**.**

### Structure multicouche

La structure multicouche comprend dans l'ordre :
- une couche protectrice (I) comprenant un copolymère acrylique tel que défini précédemment,
- une couche d'au moins un polymère thermoplastique (II),
les couches étant disposées l'une sur l'autre.

Selon une variante, la structure multicouche comprend dans l'ordre :
- une couche protectrice (Ia) comprenant un copolymère acrylique tel que défini précédemment,
- une couche d'au moins un polymère thermoplastique (II),
- une couche protectrice (Ib) comprenant un copolymère acrylique tel que défini précédemment.

Les couches sont coextrudées, comprimées à chaud ou multiinjectées, et de préférence coextrudées.

De préférence, la couche protectrice a une épaisseur comprise entre 50 et 200 µm.

### Applications

La structure multicouche, notamment celle obtenue par l'un des procédés décrit plus haut, peut être utilisée pour la fabrication d'objets et d'articles de la vie courante. Il peut s'agir par exemple :
- de boîtiers ou carters de tondeuses, de tronçonneuses, de jet-skis, d'appareils ménagers, ... ;
- de coffres de toits de voiture ;
- de pièces de carrosserie ;
- de plaques minéralogiques ;
- des panneaux muraux extérieurs de caravanes et de mobil-homes ;
- des panneaux extérieurs de réfrigérateurs ;
- des panneaux de cabines de douche ;
- de portes de bâtiments ;
- de moulures de fenêtres ;
- de panneaux de bardage ;
- de portes d'équipements ménagers (par ex. portes de cuisine).

On utilise avantageusement le PVC comme polymère thermoplastique dans la fabrication de pièces qui sont destinées à des applications extérieures telles que des portes de bâtiments, des gouttières, des moulures de fenêtres ou des bardages. On utilise avantageusement l'ABS comme polymère thermoplastique dans la fabrication de boîtiers ou carters, notamment d'appareils électroménagers, de plaques minéralogiques, de panneaux extérieurs de réfrigérateurs ou de pièces de carosserie.

De préférence, dans le cas du PVC, la structure multicouche est un panneau de bardage. De préférence, dans le cas de l'ABS, la structure multicouche est une pièce de carrosserie.

### EXEMPLES :

Les exemples suivants illustrent l'invention selon la meilleure forme (best mode) envisagée par les inventeurs. Ils ne sont donnés qu'à titre illustratif et ne limitent pas la portée de l'invention.

Des structures bicouches ont été obtenues par procédé de compression puis évaluées à l'aide d'un test de tenue à la rayure normalisé Erichsen. Seule la nature de la couche protectrice (I) change entre ces différentes structures.

### Compositions des différentes structures :

Pour la structure **1** (à titre comparatif) la couche protectrice est de l'ALTUGLAS^{®} MI7T. L'ALTUGLAS^{®} MI7T est un copolymère acrylique refermant de 20 à 30 % de modifiants choc type « dur-mou-dur » tel que défini dans le brevet US3793402.

Pour la structure **2** (conforme à l'invention) la couche protectrice est de l'ALTUGLAS^{®} HT 121. Le produit ALTUGLAS^{®} HT 121 est un copolymère acrylique qui comprend 3 à 7 % de fonctions acide méthacrylique ou anhydride pour 97 à 93 % de MMA).

Pour la structure **3** (conforme à l'invention) la couche protectrice est du PLEXIGLAS^{®} FT15. Le PLEXIGLAS^{®} FT15 est un produit commercialisé par la société Roehm.

Pour la structure **4** (conforme à l'invention) la couche protectrice est constituée d'un mélange, mélange 1, renfermant 92,5 % d'ALTUGLAS^{®} HT121 + 7,5 % d'un modifiant choc type « dur-mou-dur » tel que décrit dans la demande de brevet US 3793402.

Pour la structure **5** (conforme à l'invention) la couche protectrice est constituée d'un mélange, mélange 2, renfermant 89,0 % d'ALTUGLAS^{®} HT121 + 11 % d'un modifiant choc type « dur-mou-dur » tel que décrit dans la demande de brevet US 3793402.

Pour la structure **6** (conforme à l'invention) la couche protectrice est constituée d'un mélange, mélange 3, renfermant 76,5 % d'ALTUGLAS^{®} HT121 + 23,5 % d'un modifiant choc type « dur-mou-dur » tel que décrit dans la demande de brevet US 3793402.

### Préparation de la couche protectrice (I) :

- Conditions d'obtention des mélanges 1, 2 et 3 renfermant un mélange de PMMA et de modifiants chocs à l'aide d'une extrudeuse Buss:
   Profil température : GC1 et GC 2 : 215°C ; GC3 : 210 °C ; Filière : 220 °C
- Conditions d'obtention des films extrudés constituant la couche protectrice (I) :
   Profile de températures de l'extrudeuse (MC) :
      - Température du Corps à l'entrée et au centré 220°C,
      - Température du Corps en sortie et de la filière : 225°C,
      - Vitesse de tirage : 5,5 m/min
      - Vitesse de vis : 39 rpm
      - Température de refroidissement: 80°C
      - Epaisseur 100 µm

### Conditions d'obtention des structures bicouches ABS (II) /couche protectrice (I) par compression à la presse chauffante.

### Paramètres de marche :

Cadres : 3,1 mmn
Températures 180 °C
Préchauffe 3 minutes.
Maintien 3 minutes sous 100 bars
Epaisseur : 3,2 mm

### Caractéristiques des structures :

La tenue à la rayure des différentes structures a été évaluée à l'aide du test de tenue à la rayure normalisé Erichsen. Un test de flexion rapide a également été réalisé pour ces différentes structures. (cf tableau 1).

### Pour la Résistance à la rayure :

Conditions de test issues de la méthode Erichsen inspirée de la norme NFT 51113 :
Pointe de carbure de tungstène,
Nombre de révolutions : 1,
Vitesse de révolution : 10,5mm/s,
Observations : Microscope optique,
Mode : réflexion X10 en lumière polarisée,
   Charge utilisée de 2N,
Valeur mesurée : largeur d'entaille en microns.

### Pour le test de flexion rapide :

### Pour le test de flexion rapide :

On mesure la résilience (Re), exprimée en kJ/m², sur des éprouvettes en ABS protégées ou non par une couche protectrice acrylique. La résilience est mesurée à l'aide d'un test à flexion rapide. L'éprouvette est soumise à une flexion au milieu de la portée à une vitesse constante.

Pendant l'essai, on mesure la charge appliquée à l'éprouvette. L'essai de flexion est réalisé à vitesse constante sur l'appareillage servo-hydraulique MTS-831. La force est mesurée au moyen d'une cellule piezo-électrique noyée dans le nez du percuteur de gamme 569,4 N. Le déplacement de l'éprouvette pendant la sollicitation est mesuré par un capteur LVDT sur le vérin hydraulique de gamme 50 mm.

Durant l'essai, la force (exprimée en N) et le déplacement (en mm) du percuteur sont enregistrés. A partir des courbes expérimentales, on calcule l'aire sous la courbe qui représente la force en fonction du déplacement jusqu'à rupture du spécimen ou à la limite de déplacement avant glissement (évaluée à 20 mm). Cette aire, exprimée en Joule, est représentative de l'énergie fournie au système lors du chargement. La résistance à la flexion, notée Re, est l'énergie de rupture relative à la section droite centrale du barreau exprimée en kJ/m².

**Tableau 1**

| **Structure** | **résistance rayure Erichsen* (µm)** | **Re (kJ/m²)** |
|---|---|---|
| ABS seul (comp.) | 160 | |
| 1 (comp) : ABS/ MI7T | 99 | 33,2 ± 1,6 |
| 2 (inv) : ABS /HT 121 | 83 | 14,0 ± 1,7 |
| 3 (inv) : ABS/ FT15 | 88 | 13,8 ± 1,5 |
| 4 (inv.) : ABS/92,5 % HT121 + 7,5 % MC | 91 | 19,6 ± 0,9 |
| 5 (inv) : ABS/89 % HT 121 + 11 % MC | 95 | 27,5 ± 1,6 |
| 6 (inv) : ABS/ 76,5 % HT 121 + 23, 5 % MC | 100 | 35,1 ± 1,3 |

| | | |
|---|---|---|
| ABS : MAGNUM 3904 de chez DOW melt-index : 1,5 g/10 min 230 °C 3,8 kg épaisseur 3 mm MC : modifiants chocs | | |

On constate ainsi que les structures conformes à l'invention présentent une bonne résistance à la rayure. De plus, l'ajout de modifiants chocs au copolymère acrylique permet d'améliorer la résistance à l'impact tout en conservant une bonne résistance à la rayure.

## Revendications

1. Procédé permettant de protéger un polymère thermoplastique consistant à superposer dans l'ordre par coextrusion, par compression à chaud ou par multiinjection:
• une couche protectrice (I) comprenant un copolymère acrylique comprenant en poids (le total faisant 100%) :
- de 80 à 99,8% de méthacrylate de méthyle (MMA),
- de 0 à 20% d'au moins un comonomère copolymérisable par voie radicalaire avec le MMA,
- et de 0,2 à 10% :
o d'anhydride maléique
ou
o d'acide acrylique et/ou méthacrylique et éventuellement de groupements anhydride de formule : 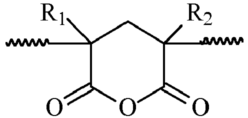 dans laquelle R₁ et R₂ désignent H ou un radical méthyle, lesdits groupements anhydride sont obtenus par deux unités acides adjacentes qui peuvent réagir entre elles par déshydratation pour donner un groupement anhydride,
• une couche d'au moins un polymère thermoplastique (II) la couche protectrice (I) a une épaisseur comprise entre 10 et 1000 µm.

2. Procédé selon la revendication 1 **caractérisé en ce que** le copolymère acrylique de la couche protectrice (I) comprend de 0 à 10 % d'au moins un comonomère copolymérisable par voie radicalaire avec le MMA.

3. Procédé selon l'une des revendications 1 ou 2 **caractérisé en ce que** le copolymère acrylique comprend en poids (le total faisant 100%) :
- de 80 à 99% de méthacrylate de méthyle (MMA),
- de 0 à 10% d'au moins un comonomère copolymérisable par voie radicalaire avec le MMA,
- et de 1 à 10% :
o d'anhydride maléique
ou
o d'acide acrylique et/ou méthacrylique et éventuellement de groupements anhydride de formule : 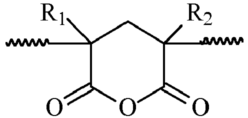 dans laquelle R₁ et R₂ désignent H ou un radical méthyle.

4. Procédé selon l'une des revendications précédentes **caractérisé en ce que** le comonomère copolymérisable par voie radicalaire avec le MMA est monomère (méth)acrylique ou un monomère vinylaromatique tel que le styrène, les styrènes substitués, l'alpha-méthylstyrène, le monochlorostyrène, le tertbutyl styrène.

5. Procédé selon la revendication 4 **caractérisé en ce que** le monomère vinylaromatique est du styrène et/ou de l'alpha méthyl styrène.

6. Procédé selon l'une des revendications précédentesà 3 **caractérisé en ce que** le copolymère acrylique comprend en poids (le total faisant 100%) de 90 à 99% de méthacrylate de méthyle (MMA) et de 1 à 10% :
o d'anhydride maléique
ou
o d'acide acrylique et/ou méthacrylique et éventuellement de groupements anhydride de formule : 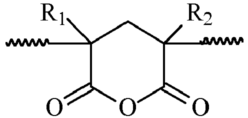 dans laquelle R₁ et R₂ désignent H ou un radical méthyle.

7. Procédé selon l'une quelconque des revendications précédentes **caractérisé en ce que** le copolymère acrylique est renforcé à l'impact à l'aide d'au moins un modifiant choc.

8. Procédé selon la revendication 7 **caractérisé en ce que** la proportion de modifiant choc dans le copolymère acrylique varie de 0 à 60 parts, avantageusement de 1 à 60 parts, de préférence de 5 à 40 parts, encore plus préférentiellement de 10 à 30 parts, pour 100 parts de copolymère acrylique.

9. Procédé selon l'une quelconque des revendications précédentes **caractérisé en ce que** la couche protectrice (I) comprend un ou plusieurs additifs choisis parmi les stabilisants thermiques, les lubrifiants, les additifs ignifugeants, les additifs anti-UV, les antioxydants, les additifs antistatiques, les agents mattants, les pigments et les colorants.

10. Procédé selon l'une quelconque des revendications précédentes **caractérisé en ce qu'**une autre couche protectrice comprenant un copolymère acrylique tel que défini à l'une des revendications précédentes est superposée contre la couche du polymère thermoplastique (II), la couche du polymère thermoplastique (II) étant prise en sandwich entre la couche protectrice (I) et l'autre couche protectrice.

11. Structure multicouche comprenant dans l'ordre :
• une couche protectrice (I) telle que définie à l'une quelconque des revendications 1 à 9,
• une couche d'au moins un polymère thermoplastique (II), choisi parmi un polyester saturé, de l'ABS, du SAN, de l'ASA, un polystyrène cristal ou choc, un polypropylène, un polyéthylène, un PPO, un polysulphone, un PVC, un PVC chloré ou un PVC expansé
les couches étant disposées l'une sur l'autre.

12. Structure multicouche selon la revendication 11 **caractérisée en ce qu'**une autre couche protectrice comprenant un copolymère acrylique tel que défini à l'une des revendications 1 à 9 est superposée contre la couche du polymère thermoplastique (II).

13. Utilisation de la structure multicouche selon l'une quelconque des revendications 11 ou 12 pour la fabrication d'objets et d'articles de la vie courante tels que :
- des boîtiers ou carters de tondeuses, de tronçonneuses, de jet-skis, d'appareils ménagers ;
- des coffres de toits de voiture, de pièces de carrosserie ;
- des plaques minéralogiques ;
- des panneaux muraux extérieurs de caravanes et de mobil-homes ;
- des panneaux extérieurs de réfrigérateurs ;
- des panneaux de cabines de douche ;
- des portes de bâtiments ;
- des moulures de fenêtres ;
- des panneaux de bardage ;
- de portes d'équipements ménagers (par ex. portes de cuisine).

## Patentansprüche

1. Verfahren zum Schützen eines thermoplastischen Polymers, bei dem man mittels Coextrusion durch Heißpressen oder Mehrkomponentenspritzgießen in dieser Reihenfolge Folgendes übereinanderschichtet:
• eine Schutzschicht (I), die ein Acryl-Copolymer umfasst, umfassend, bezogen auf das Gewicht (wobei die Summe 100% ausmacht):
- 80 bis 99,8% Methylmethacrylat (MMA),
- 0 bis 20% mindestens eines Co-Monomers, das mit MMA radikalisch copolymerisierbar ist,
- und 0,2 bis 10%:
o Maleinsäureanhydrid
oder
o Acryl- und/oder Methacrylsäure und gegebenenfalls Anhydridgruppen der folgenden Formel: 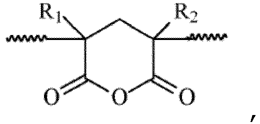 worin R₁ und R₂ H oder einen Methylrest bedeuten, wobei die Anhydridgruppen durch zwei benachbarte Säureeinheiten, die miteinander mittels Wasserabspaltung unter Bildung einer Anhydridgruppe reagieren können, erhalten werden,
• eine Schicht aus mindestens einem thermoplastischen Polymer (II),
wobei die Schutzschicht (I) eine Dicke zwischen 10 und 1000 µm besitzt.

2. Verfahren nach Anspruch 1, **dadurch gekennzeichnet, dass** das Acryl-Copolymer der Schutzschicht (I) 0 bis 10% mindestens eines mit MMA radikalisch copolymerisierbaren Co-Monomers enthält.

3. Verfahren nach einem der Ansprüche 1 oder 2, **dadurch gekennzeichnet, dass** das Acryl-Copolymer, bezogen auf das Gewicht (wobei die Summe 100% ausmacht), Folgendes umfasst:
- 80 bis 99% Methylmethacrylat (MMA),
- 0 bis 10% mindestens eines Co-Monomers, das mit MMA radikalisch copolymerisierbar ist,
- und 1 bis 10%:
∘ Maleinsäureanhydrid
oder
∘ Acryl- und/oder Methacrylsäure und gegebenenfalls Anhydridgruppen der folgenden Formel: 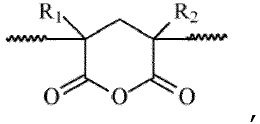 worin R₁ und R₂ H oder einen Methylrest bedeuten.

4. Verfahren nach einem der vorhergehenden Ansprüche, **dadurch gekennzeichnet, dass** das mit MMA radikalisch copolymerisierbare Co-Monomer (Meth)Acryl-Monomer oder ein vinylaromatisches Monomer, wie Styrol, substituierte Styrole, alpha-Methylstyrol, Monochlorstyrol, tert-Butylstyrol, ist.

5. Verfahren nach Anspruch 4, **dadurch gekennzeichnet, dass** das vinylaromatische Monomer Styrol und/oder alpha-Methylstyrol ist.

6. Verfahren nach einem der vorhergehenden Ansprüche, **dadurch gekennzeichnet, dass** das Acryl-Copolymer, bezogen auf das Gewicht (wobei die Summe 100% ausmacht), 90 bis 99% Methylmethacrylat (MMA) und 1 bis 10% von Folgendem umfasst:
∘ Maleinsäureanhydrid
oder
∘ Acryl- und/oder Methacrylsäure und gegebenenfalls Anhydridgruppen der folgenden Formel: 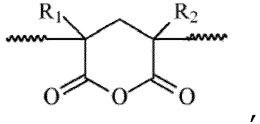 worin R₁ und R₂ H oder einen Methylrest bedeuten.

7. Verfahren nach einem der vorhergehenden Ansprüche, **dadurch gekennzeichnet, dass** das Acryl-Copolymer gegenüber Schlag/Stoß mithilfe mindestens eines Schlagzähigkeitsmodifikators verstärkt ist.

8. Verfahren nach Anspruch 7, **dadurch gekennzeichnet, dass** der Anteil an Schlagzähigkeitsmodifikator im Acryl-Copolymer von 0 bis 60 Teilen, vorteilhafterweise von 1 bis 60 Teilen, vorzugsweise von 5 bis 40 Teilen, noch stärker bevorzugt von 10 bis 30 Teilen pro 100 Teile Acryl-Copolymer variiert.

9. Verfahren nach einem der vorhergehenden Ansprüche, **dadurch gekennzeichnet, dass** die Schutzschicht (I) ein oder mehrere Additive umfasst, ausgewählt aus der Gruppe, bestehend aus Wärmestabilisatoren, Schmiermitteln, brandhemmenden Additiven, UV-Stabilisatoren, Antioxidantien, antistatischen Additiven, Mattierungsmitteln, Pigmenten und Färbemitteln.

10. Verfahren nach einem der vorhergehenden Ansprüche, **dadurch gekennzeichnet, dass** eine weitere Schutzschicht, die ein Acryl-Copolymer nach einem der vorhergehenden Ansprüche umfasst, über der Schutzschicht aus dem thermoplastischen Polymer (II) aufgebracht ist, wobei die Schicht aus thermoplastischem Polymer (II) sandwichartig zwischen die Schutzschicht (I) und die weitere Schutzschicht eingebracht ist.

11. Mehrschichtstruktur, die in dieser Reihenfolge Folgendes umfasst:
• eine Schutzschicht (I) nach einem der Ansprüche 1 bis 9,
• eine Schicht aus mindestens einem thermoplastischen Polymer (II), das aus einem gesättigten Polyester, ABS, SAN, ASA, einem Kristall- oder schlagfesten Polystyrol, einem Polypropylen, einem Polyethylen, einem PPO, einem Polysulfon, einem PVC, einem chlorierten PVC oder einem expandierten PVC ausgewählt ist,
wobei die Schichten aufeinander angeordnet sind.

12. Mehrschichtstruktur nach Anspruch 11, **dadurch gekennzeichnet, dass** eine weitere Schutzschicht, die ein Acryl-Copolymer nach einem der Ansprüche 1 bis 9 umfasst, über der Schicht aus thermoplastischem Polymer (II) aufgebracht ist.

13. Verwendung der Mehrschichtstruktur nach einem der Ansprüche 11 oder 12 zur Herstellung von Alltagsgegenständen und -waren, wie
- Kästen oder Gehäuse von Rasenmähern, Motorsägen, Jet-Ski, Haushaltsgeräten;
- Autodachkästen, Karosserieteile;
- Nummernschilder;
- Außenwandverkleidungen von Wohnwägen und Wohnmobilen;
- Außenwandelemente von Kühlschränken;
- Wänden von Duschkabinen;
- Gebäudetüren;
- Fensterleisten;
- Verkleidungsplatten;
- Türen von Haushaltseinrichtungen (z. B. Küchentüren.

## Claims

1. Method for protecting a thermoplastic polymer comprising superposing, in this order, by coextrusion, by hot compression moulding or by multi-injection moulding:
• a protective layer (I) comprising an acrylic copolymer comprising, by weight (the total making 100%) :
- from 80 to 99.8% of methyl methacrylate (MMA),
- from 0 to 20% of at least one comonomer radically copolymerizable with MMA, and
- from 0.2 to 10%:
∘ of maleic anhydride
or
∘ of acrylic and/or methacrylic acid and optionally of anhydride groups of formula: 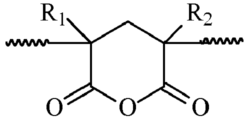 in which R₁ and R₂ denote H or a methyl radical, said anhydride groups are obtained by two adjacent acid units which can interact by dehydration to give an anhydride group,
• a layer of at least one thermoplastic polymer (II), the protective layer (I) has a thickness between 10 and 1000 µm

2. Method according to Claim 1, **characterized in that** the acrylic copolymer of the protective layer (I) comprises from 0 to 10% of at least one comonomer radically copolymerizable with MMA.

3. Method according to either one of Claims 1 and 2, **characterized in that** the acrylic copolymer comprises by weight (the total making 100%):
- from 80 to 99% of methyl methacrylate (MMA),
- from 0 to 10% of at least one comonomer radically copolymerizable with MMA, and
- from 1 to 10%:
∘ of maleic anhydride
or
∘ of acrylic and/or methacrylic acid and optionally of anhydride groups of formula: 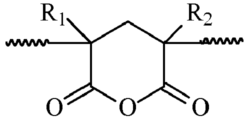 in which R₁ and R₂ denoting H or a methyl radical.

4. Method according to one of the preceding claims, **characterized in that** the comonomer radically copolymerizable with MMA is a (meth)acrylic monomer or a vinyl aromatic monomer such as styrene, substituted styrenes, alpha-methylstyrene, monochlorostyrene, tert-butylstyrene.

5. Method according to Claim 4, **characterized in that** the vinyl aromatic monomer is styrene and/or alpha-methylstyrene.

6. Method according to one of the preceding claims, **characterized in that** the acrylic copolymer comprises by weight (the total making 100%), from 90 to 99% of methyl methacrylate (MMA), and from 1 to 10%:
∘ of maleic anhydride
or
∘ of acrylic and of maleic anhydride and formula: optionally of anhydride groups of 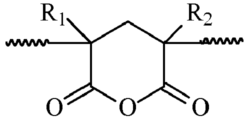 in which R₁ and R₂ denote H or a methyl radical.

7. Method according to any one of the preceding claims, **characterized in that** the impact strength of the acrylic copolymer is improved by means of at least one impact modifier.

8. Method according to Claim 7, **characterized in that** the proportion of impact modifier in the acrylic copolymer varies from 0 to 60 parts, advantageously from 1 to 60 parts, preferably from 5 to 40 parts, even more preferably from 10 to 30 parts, per 100 parts of acrylic copolymer.

9. Method according to any one of the preceding claims, **characterized in that** the protective layer (I) comprises one or more additives selected from thermal stabilizers, lubricants, fireproofing agents, UV stabilizers, antioxidants, antistatic additives, dulling agents, pigments and dyes.

10. Method according to any one of the preceding claims, **characterized in that** another protective layer comprising an acrylic copolymer as defined in one of the preceding claims is superposed against the layer of thermoplastic polymer (II), the layer of thermoplastic polymer (II) being sandwiched between the protective layer (I) and the other protective layer.

11. Multilayer structure comprising, in this order:
• a protective layer (I) as defined in any one of Claims 1 to 9,
• a layer of at least one thermoplastic polymer (II), selected from a saturated polyester, ABS, SAN, ASA, a crystalline or high-impact polystyrene, a polypropylene, a polyethylene, a PPO, a polysulfone, a PVC, a chlorinated PVC or an expanded PVC,
the layers being arranged on one another.

12. Multilayer structure according to Claim 11, **characterized in that** another protective layer comprising an acrylic copolymer as defined in one of Claims 1 to 9 is superposed against the layer of thermoplastic polymer (II).

13. Use of the multilayer structure according to either one of Claims 11 and 12 for the manufacture of objects and everyday articles such as:
- bodies or casings of lawnmowers, of chain saws, of jet-skis, of domestic appliances;
- automobile trunk lids, bodywork parts;
- automobile number plates;
- external wall panels of caravans and of mobile homes;
- external panels of refrigerators;
- panels of shower cubicles;
- doors of buildings;
- window mouldings;
- cladding panels;
- doors of household equipment (for example kitchen doors).
